# EUROPEAN PATENT APPLICATION

(11) **EP 4 827 226 A1**
(43) Date of publication of application: **21.10.2026**
(21) Application number: 24916720.6
(22) Date of filing: 23.12.2024
(51) Int. Cl.: H04W 74/04

(54) **COMMUNICATION METHOD AND APPARATUS**

(30) Priority: 09.01.2024 CN 202410033268
(71) Applicant: Huawei Technologies Co., Ltd., Shenzhen, Guangdong 518129 (CN)
(72) Inventor: SHI, Juncai, Shenzhen, Guangdong 518129 (CN); GAO, Lei, Shenzhen, Guangdong 518129 (CN); CHENG, Xingqing, Shenzhen, Guangdong 518129 (CN)
(74) Representative: Huawei European IPR
(86) International application number: PCT/CN2024/141612
(87) International publication number: WO 2025/148673

(57) **Abstract**

This application relates to a communication method and apparatus. In the communication method, first information sent by a first grant node may indicate identification information of at least one terminal node associated with the first grant node, to trigger a corresponding terminal node to send second information, so that the first grant node that receives the second information learns whether data can be sent. For example, if the first grant node sends data to a first terminal node based on the second information, it indicates that there is no signal collision problem during data transmission between the first grant node and the first terminal node. For example, if the first grant node does not send data to the first terminal node based on the second information, it indicates that there is a signal collision problem during data transmission between the first grant node and the first terminal node. Therefore, this can reduce a communication conflict between the first grant node and another grant node in a network, to implement interference avoidance, improve communication quality of the node, and enhance user experience.

## Description

This application claims priority to Chinese Patent Application No. 202410033268.9, filed with the China National Intellectual Property Administration on January 9, 2024 and entitled "COMMUNICATION METHOD AND APPARATUS", which is incorporated herein by reference in its entirety.

### TECHNICAL FIELD

This application relates to the fields of internet of vehicles and communication technologies, and in particular, to a communication method and apparatus.

### BACKGROUND

Diversification of on-board applications leads to an increase in quantity and types of in-vehicle communication nodes, and imposes a higher requirement on an on-board communication capability. Compared with the existing wired communication, on-board wireless communication can further reduce a quantity, length, and weight of wiring harnesses in a vehicle, and corresponding mounting and maintenance costs. Therefore, on-board communication technologies, for example, an on-board short-distance communication technology, tend to be gradually wireless.

Currently, an on-board short-distance communication technology supports a manner in which primary nodes corresponding to a plurality of communication domains compete with each other to preempt a channel. However, the manner for preempting a channel may have a hidden terminal problem. For example, if a grant (grant, G) node in a communication domain and a G node in another management domain are perception-free, a terminal (terminal, T) node may receive signals of the two G nodes at the same time. In other words, signal collision occurs between the signals of the two G nodes, affecting communication quality of the nodes.

### SUMMARY

This application provides a communication method and apparatus, to implement interference avoidance, improve communication quality of a node, and enhance user experience.

According to a first aspect, a communication method is provided. The method may be performed by a first grant node, may be performed by a module (for example, a processor, a chip, or a chip system) used in the first grant node, or may be implemented by a logical node, a logical module, or software that can implement all or some functions of the first grant node. In the communication method, first information may be sent. The first information at least indicates identification information of N terminal nodes associated with the first grant node, where N is a positive integer. The N terminal nodes include a first terminal node, identification information of the first terminal node is used to trigger the first terminal node to send second information, and the second information at least indicates that the first grant node is allowed to send data to the first terminal node or the first grant node is not allowed to send data to the first terminal node. In this way, the second information may be further received, and whether to send data to the first terminal node may be determined based on the second information.

It can be learned that in the foregoing embodiment, the first information sent by the first grant node may indicate identification information of at least one terminal node associated with the first grant node, to trigger a corresponding terminal node to send the second information, so that the first grant node that receives the second information learns whether data can be sent. For example, if the first grant node sends data to the first terminal node based on the second information, it indicates that there is no signal collision problem during data transmission between the first grant node and the first terminal node. For example, if the first grant node does not send data to the first terminal node based on the second information, it indicates that there is a signal collision problem during data transmission between the first grant node and the first terminal node. Therefore, this can reduce a communication conflict between the first grant node and another grant node in a network, to implement interference avoidance, improve communication quality of the node, and enhance user experience.

With reference to the first aspect, optionally, the first information further indicates first channel occupancy time of the first grant node, the second information further indicates second channel occupancy time, and the second channel occupancy time is associated with the first channel occupancy time.

It can be learned that in the foregoing embodiment, the first information may indicate the first channel occupancy time. In this case, a terminal node not associated with the first grant node may perform back off after receiving the first information, so that the terminal node does not perform data transmission within the first channel occupancy time, thereby not interfering with data transmission of the first grant node. Any one of the N terminal nodes may not only determine the second channel occupancy time based on the first channel occupancy time, but also indicate the second channel occupancy time by using the second information, so that another grant node that receives the second information may learn that a channel is occupied, so that the another grant node does not send a signal within the second channel occupancy time. This can reduce a communication conflict between the first grant node and another grant node in the network, to implement interference avoidance, improve communication quality of the node, and enhance user experience.

With reference to the first aspect, optionally, the first information further indicates identification information of the first grant node, and the second information further indicates the identification information of the first grant node.

It can be learned that in the foregoing embodiment, the first information may indicate the identification information of the first grant node, so that any one of the N terminal nodes may indicate the identification information of the first grant node in the second information, so that another grant node that receives the second information may learn that the channel is occupied by the first grant node.

With reference to the first aspect, optionally, the first information further indicates N, namely, a quantity of users associated with the first grant node.

It can be learned that in the foregoing embodiment, because the first information may indicate the quantity of users associated with the first grant node, any one of the N terminal nodes may be enabled to verify, with reference to the quantity of users, a quantity of pieces of the identification information of the terminal node indicated by the first information, thereby reducing a problem of incomplete information parsing.

With reference to the first aspect, optionally, the first information includes a first field and a second field. The first field indicates the identification information of the N terminal nodes, the second field indicates the first channel occupancy time of the first grant node, and the first field is located after the second field in time domain.

It can be learned that in the foregoing embodiment, the first field is located after the second field in time domain, so that any one of the N terminal nodes can first learn of the information indicated by the second field, and the terminal node may completely parse the information indicated by the first field with reference to the information indicated by the second field, thereby reducing a problem of incomplete information parsing.

With reference to the first aspect, optionally, the first information further includes a first synchronization signal, and the first synchronization signal is located after the second field and before the first field in time domain.

It can be learned that in the foregoing embodiment, the first synchronization signal is located after the second field and before the first field in time domain. This indicates that any one of the N terminal nodes may receive the first field after completing time synchronization with the first grant node by using the first synchronization signal. This improves demodulation performance of the first field.

With reference to the first aspect, optionally, the second field further indicates a quantity of time units occupied by the first field.

It can be learned that in the foregoing embodiment, the second field further indicates the quantity of time units occupied by the first field, so that any one of the N terminal nodes can learn of a length of the information indicated by the first field, and the terminal node can verify whether the information indicated by the first field is completely obtained or whether excessive information is obtained, thereby reducing a problem of a deviation occurring when the information indicated by the first field is parsed.

With reference to the first aspect, optionally, the identification information of the N terminal nodes includes physical layer identification of the N terminal nodes.

It can be learned that in the foregoing embodiment, because the physical layer identification of the terminal node occupies a small quantity of bits, indication overheads can be reduced, and transmission resources can be saved.

With reference to the first aspect, optionally, the second information includes a third field and a fourth field. The third field indicates that the first grant node is allowed to send data to the first terminal node or the first grant node is not allowed to send data to the first terminal node, the fourth field indicates the second channel occupancy time, and the third field is located after the fourth field in time domain.

It can be learned that in the foregoing embodiment, the third field is located after the fourth field in time domain, so that another grant node may first learn that a channel is occupied, and therefore does not continue to perform channel contention and not send a signal within the second channel occupancy time, thereby better ensuring interference avoidance.

With reference to the first aspect, optionally, that the fourth field indicates the second channel occupancy time includes: the fourth field indicates a quantity of time units included in the second channel occupancy time.

With reference to the first aspect, optionally, a location of the third field in time domain is associated with a location of the identification information of the first terminal node in the first field.

It can be learned that in the foregoing embodiment, the location of the third field in time domain is implicitly indicated, indication overheads are reduced, and transmission resources are saved.

According to a second aspect, a communication method is provided. The method may be performed by a first terminal node, may be performed by a module (for example, a processor, a chip, or a chip system) used in the first terminal node, or may be implemented by a logical node, a logical module, or software that can implement all or some functions of the first terminal node. In the communication method, first information may be received. The first information at least indicates identification information of N terminal nodes associated with a first grant node, where N is a positive integer. The N terminal nodes include the first terminal node, identification information of the first terminal node is used to trigger the first terminal node to send second information, and the second information at least indicates that the first grant node is allowed to send data to the first terminal node or the first grant node is not allowed to send data to the first terminal node. The second information may be further sent, and the second information is further used by the first grant node to determine whether to send data to the first terminal node.

It can be learned that in the foregoing embodiment, the first terminal node may receive the first information, and because the terminal node indicated by the first information includes the first terminal node, the first terminal node may send the second information. In this way, the first grant node that receives the second information learns whether data can be sent. For example, if the first grant node sends data to the first terminal node based on the second information, it indicates that there is no signal collision problem during data transmission between the first grant node and the first terminal node. For example, if the first grant node does not send data to the first terminal node based on the second information, it indicates that there is a signal collision problem during data transmission between the first grant node and the first terminal node. Therefore, this can reduce a communication conflict between the first grant node and another grant node in a network, to implement interference avoidance, improve communication quality of the node, and enhance user experience.

With reference to the second aspect, optionally, the first information further indicates first channel occupancy time of the first grant node, the second information further indicates second channel occupancy time, and the second channel occupancy time is associated with the first channel occupancy time.

It can be learned that in the foregoing embodiment, the first terminal node may not only determine the second channel occupancy time based on the first channel occupancy time, but also indicate the second channel occupancy time by using the second information, so that another grant node that receives the second information may learn that a channel is occupied, so that the another grant node does not send a signal within the second channel occupancy time. This can reduce a communication conflict between the first grant node and another grant node in the network, to implement interference avoidance, improve communication quality of the node, and enhance user experience.

With reference to the second aspect, optionally, the first information further indicates identification information of the first grant node, and the second information further indicates the identification information of the first grant node.

It can be learned that in the foregoing embodiment, the first information may indicate the identification information of the first grant node, so that the first terminal node may indicate the identification information of the first grant node in the second information, so that another grant node that receives the second information may learn that the channel is occupied by the first grant node.

With reference to the second aspect, optionally, the first information further indicates N, namely, a quantity of users associated with the first grant node.

It can be learned that in the foregoing embodiment, because the first information may indicate the quantity of users associated with the first grant node, the first terminal node may be enabled to verify, with reference to the quantity of users, a quantity of pieces of the identification information of the terminal node indicated by the first information, thereby reducing a problem of incomplete information parsing.

With reference to the second aspect, optionally, the first information includes a first field and a second field. The first field indicates the identification information of the N terminal nodes, the second field indicates the first channel occupancy time of the first grant node, and the first field is located after the second field in time domain.

It can be learned that in the foregoing embodiment, the first field is located after the second field in time domain, so that the first terminal node can first learn of the information indicated by the second field, and the first terminal node may completely parse the information indicated by the first field with reference to the information indicated by the second field, thereby reducing a problem of incomplete information parsing.

With reference to the second aspect, optionally, the first information further includes a first synchronization signal, and the first synchronization signal is located after the second field and before the first field in time domain.

It can be learned that in the foregoing embodiment, the first synchronization signal is located after the second field and before the first field in time domain. This indicates that the first terminal node may receive the first field after completing time synchronization with the first grant node by using the first synchronization signal. This improves demodulation performance of the first field.

With reference to the second aspect, optionally, the second field further indicates a quantity of time units occupied by the first field.

It can be learned that in the foregoing embodiment, the second field further indicates the quantity of time units occupied by the first field, so that the first terminal node can learn of a length of the information indicated by the first field, and the first terminal node can verify whether the information indicated by the first field is completely obtained or whether excessive information is obtained, thereby reducing a problem of a deviation occurring when the information indicated by the first field is parsed.

With reference to the second aspect, optionally, the identification information of the N terminal nodes includes physical layer identification of the N terminal nodes.

It can be learned that in the foregoing embodiment, because the physical layer identification of the terminal node occupies a small quantity of bits, indication overheads can be reduced, and transmission resources can be saved.

With reference to the second aspect, optionally, the second information includes a fourth field and a third field. The fourth field indicates the second channel occupancy time, the third field indicates that the first grant node is allowed to send data to the first terminal node or the first grant node is not allowed to send data to the first terminal node, and the third field is located after the fourth field in time domain.

With reference to the second aspect, optionally, that the fourth field indicates the second channel occupancy time includes: the fourth field indicates a quantity of time units included in the second channel occupancy time.

With reference to the second aspect, optionally, a location of the third field in time domain is associated with a location of the identification information of the first terminal node in the first field.

It can be learned that in the foregoing embodiment, the location of the third field in time domain is implicitly indicated, indication overheads are reduced, and transmission resources are saved.

According to a third aspect, a communication apparatus is provided, including a unit or a module configured to implement the method according to any one of the implementations of the first aspect and the second aspect. The communication apparatus may be a first grant node or a first terminal node, may be a module (for example, a processor, a chip, or a chip system) of the first grant node or the first terminal node, or may be a logical node, a logical module, or software that can implement all or some functions of the first grant node or the first terminal node.

According to a fourth aspect, a communication apparatus is provided. The communication apparatus includes at least one processor. The at least one processor is configured to perform the method according to any one of the implementations of the first aspect and the second aspect. The communication apparatus may be a first grant node or a first terminal node, may be a module (for example, a processor, a chip, or a chip system) of the first grant node or the first terminal node, or may be a logical node, a logical module, or software that can implement all or some functions of the first grant node or the first terminal node. The at least one processor may execute a computer program or instructions in a memory, so that the foregoing method is performed. The memory may be included in the communication apparatus, or may be located outside the communication apparatus. In addition, the communication apparatus may further include an interface.

According to a fifth aspect, a communication system is provided. The communication system includes a first grant node and a first terminal node. The first grant node is configured to perform the method according to any one of the implementations of the first aspect, and the first terminal node is configured to perform the method according to any one of the implementations of the second aspect.

According to a sixth aspect, a computer-readable storage medium is provided. The computer-readable storage medium stores computer instructions. When the computer instructions are executed, a computer is enabled to perform the method according to any one of the implementations of the first aspect and the second aspect.

According to a seventh aspect, a computer program product is provided. The computer program product includes computer program code. When the computer program code is run by a computer, the computer is enabled to perform the method according to any one of the implementations of the first aspect and the second aspect.

According to an eighth aspect, a terminal is provided. The terminal includes the communication apparatus according to the third aspect.

In a possible implementation, the terminal may be an intelligent terminal or a transportation means such as a vehicle, an uncrewed aerial vehicle, or a robot.

### BRIEF DESCRIPTION OF DRAWINGS

FIG. 1 is a diagram of a communication domain;
FIG. 2 is a diagram of a possible communication system according to an embodiment of this application;
FIG. 3 is a schematic flowchart of a communication method according to an embodiment of this application;
FIG. 4 is a diagram of an LBT frame structure according to an embodiment of this application;
FIG. 5 is a diagram of a structure of a communication apparatus 50 according to an embodiment of this application; and
FIG. 6 is a diagram of a structure of another possible communication apparatus 60 according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the words such as "first" and "second" are used in embodiments of this application to distinguish between same items or similar items that have basically same network elements or purposes. A person skilled in the art may understand that the words such as "first" and "second" do not limit a quantity or an execution sequence, and the words such as "first" and "second" do not necessarily indicate a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and variants thereof all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

To facilitate understanding of content of the solutions, the following further explains and describes some terms in embodiments of this application, to facilitate understanding by a person skilled in the art. This part is merely for ease of understanding, and cannot be considered as a specific limitation on this application.

### 1. Node (node)

In this application, a node is an electronic device with a communication capability and/or a data processing capability.

For example, the electronic device may be a terminal device. The terminal device is an entity that is on a user side and that is configured to receive a signal, send a signal, or receive and send a signal. The terminal device is configured to provide one or more of a voice service and a data connectivity service for a user. The terminal device may be a device that includes a wireless transceiver function and that can cooperate with a network device to provide a communication service for a user. Specifically, the terminal device may refer to user equipment (user equipment, UE), an access terminal, a subscriber unit, a subscriber station, a mobile station, a remote station, a remote terminal, a mobile device, a terminal, a wireless communication device, a user agent, a user apparatus, or a road side unit (road side unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a compute device or another processing device connected to a wireless modem, a wearable device (also referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), or the like. Alternatively, the terminal device may be a terminal in a fifth generation mobile communication technology (5th generation mobile networks, 5G) system, or may be a terminal in a next generation communication system. This is not limited in embodiments of this application.

Various terminal devices described above that are located on a vehicle (for example, placed in the vehicle or mounted in the vehicle) may all be considered as on-board terminals. For example, the on-board terminals may include an on-board unit (on-board unit, OBU), a camera, a mobile data center (mobile data center, MDC), a cockpit domain controller (cockpit domain controller, CDC), a battery control unit (battery control unit, BCU), a battery monitor unit (battery monitor unit, BMU), a telematics box (telematics bOX, T-Box), and the like.

For another example, the electronic device may be a network device. The network device is an entity that is on a network side and that is configured to send a signal, receive a signal, or send and receive a signal. The network device may be an apparatus deployed in a radio access network (radio access network, RAN) to provide a wireless communication function for the terminal device.

In a possible scenario, the network device may be a device with a base station function, for example, an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial network device in an NTN, that is, a device, a satellite, or the like that may be deployed on a high-altitude platform. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a radio frequency unit (remote radio unit, RRU) in a distributed base station scenario, a transmitting and receiving point (transmitting and receiving point, TRP), a transmitting point (transmitting point, TP), a mobile switching center, or the like, or may be an antenna panel of a base station. The control node may be connected to a plurality of base stations, and configure resources for a plurality of terminals covered by the plurality of base stations. A device with a base station function may have different names in systems using different radio access technologies. For example, the device may be a gNB in 5G, a network side device in a network after 5G, a network device in a future evolved public land mobile (communication) network (public land mobile network, PLMN), or a device that functions as a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, and the like in an open radio access network (open RAN, O-RAN or ORAN) or a cloud radio access network (cloud radio access network, CRAN).

A device form of the electronic device is not limited in embodiments of this application. An apparatus configured to implement a function of the electronic device may be the electronic device, or may be an apparatus that can support the electronic device in implementing the function, for example, a chip system. The apparatus may be mounted in the electronic device or used in conjunction with the electronic device. In embodiments of this application, the chip system may include a chip, or may include a chip and another discrete component.

It should be understood that, in some technical scenarios, an electronic device with a capability similar to a data receiving and sending capability may not be referred to as a node. However, for ease of description, electronic devices with the data receiving and sending capability are collectively referred to as nodes in embodiments of this application. In different used communication technologies, the node may also have a specific name. For example, when a short range wireless communication technology in the SparkLink specification is used, the node described in embodiments of this application may be referred to as a primary node or a secondary node. The primary node and the secondary node may also be respectively referred to as a G node and a T node. Names of the primary node and the secondary node are not limited in this application. The following uses the G node and the T node as an example for description.

The G node may manage the T node, has a resource allocation function, and is responsible for allocating a wireless communication resource to the T node. The T node communicates, based on scheduling of the G node, with the G node by using the resource allocated by the G node. For example, the G node is a mobile phone, the T node is a headset, and the mobile phone establishes a communication connection to the headset to implement data exchange. The mobile phone manages the headset. The mobile phone has a resource allocation function, and may allocate a resource to the headset. For another example, the G node is a battery management unit, the T node is a battery unit, and the battery management unit establishes a communication connection to the battery unit. The battery management unit may allocate a resource to the battery unit. The battery unit sends information such as a status of the battery unit to the battery management unit, so that the battery management unit intelligently manages battery units.

In addition, in this application, identification information of a node may be used to uniquely identify the node. For example, the identification information of the node may be layer 2 identification (layer 2 identification, L2ID) or physical layer identification (physical layer ID). Herein, these are merely some examples. This is not limited in this application. Any information that can uniquely identify a node may be used as the identification information of the node in this application.

### 2. Communication domain

A communication domain is a system formed by a group of nodes having a communication relationship and a communication connection relationship between the nodes. Generally, the communication domain may include a plurality of nodes, for example, at least one G node and at least one T node.

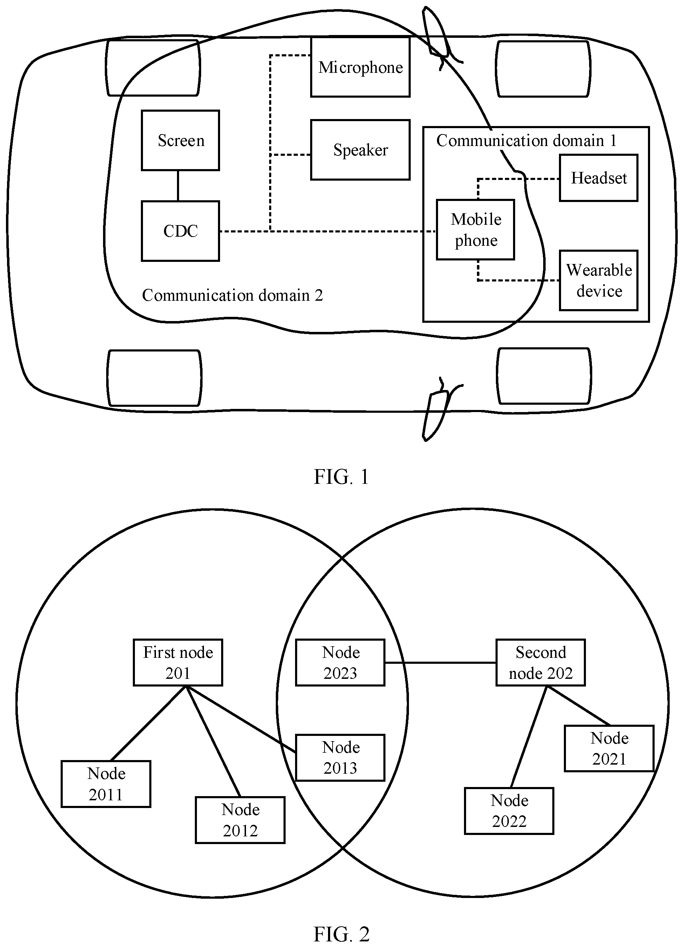

Optionally, one node may be in at least one communication domain. For example, in FIG. 1, a vehicle includes two communication domains, including a communication domain 1 and a communication domain 2. When the mobile phone performs wireless communication with the headset, the mobile phone is a G node in the communication domain 1, and the headset and a wearable device are T nodes in the communication domain 1. After the mobile phone detects a CDC and establishes a wireless connection to the CDC, the mobile phone is also in the communication domain 2. In the communication domain 2, the CDC is a G node, the mobile phone is a T node, and the mobile phone follows scheduling of the CDC. The communication domain 2 may further include another T node, for example, a speaker or a microphone.

### 3. Time unit

The time unit mentioned in this application may be a super frame, a radio frame, a symbol, or another time domain granularity, for example, a basic time unit Ts.

The super frame may include a plurality of radio frames. The radio frame may include a plurality of symbols. A quantity of symbols included in the radio frame when a cyclic prefix (cyclic prefix, CP) is a normal cyclic prefix (normal CP, NCP) may be greater than a quantity of symbols included in the radio frame when the CP is an extended cyclic prefix (extended CP, ECP). Duration of the symbol in the radio frame when the CP is the NCP may be less than duration of the symbol in the radio frame when the CP is the ECP. For ease of differentiation below, the symbol when the CP is the NCP may be referred to as a short symbol, and the symbol when the CP is the ECP may be referred to as an extended symbol or a long CP symbol. Names of the symbols are not limited in this application.

Optionally, the symbol mentioned in this application may be an orthogonal frequency-division multiplexing (orthogonal frequency-division multiplexing, OFDM) symbol. In this case, the short symbol, the extended symbol, and the long CP symbol may also be respectively referred to as a short OFDM symbol, an extended OFDM symbol, and a long CP-OFDM symbol. Names of the symbols are not limited in this application. The following uses the short symbol and the long CP symbol as an example for description.

The following describes the super frame and the radio frame in detail by using a spark link basic (spark link basic, SLB) access technology as an example. Specifically, a super frame period may be 1 millisecond (ms), that is, duration of the super frame is 1 ms. One super frame may include 48 radio frames, and duration of the radio frame may be 1/48=20.833 microseconds (µs).

It should be noted that the foregoing merely provides an example of a quantity of radio frames included in one super frame. With evolution of communication technologies, the quantity of radio frames included in one super frame may alternatively be another value. This is not limited in this application.

Generally, the super frame may have a super frame sequence number (or referred to as a number or a super frame number), to distinguish between different super frames in a period of time.

Ts is a basic time unit of various time lengths of a physical layer in an on-board short-distance communication standard. Ts=1/fs, and fs is a carrier frequency. For example, fs=30.72 megahertz (MHz). When Ts is used as a unit, one long CP symbol is, for example, 78 Ts, and one short symbol is, for example, 64 Ts. Herein, these are merely some examples. With evolution of communication technologies, the length of the long CP symbol and/or the length of the short symbol may alternatively be another value. This is not limited in this application.

### 4. Preamble information (or referred to as a preamble or a preamble message)

The preamble information is a piece of information sent by a node after channel contention, for example, a piece of preamble information sent before the G node enters a super frame structure after channel contention. The channel contention is also referred to as transmission resource contention, channel contention, or the like, which is a manner in which the communication domain obtains a transmission resource.

Optionally, the preamble information may indicate a change of configuration information, for example, indicate a change of random access resource pool configuration information, channel sounding reference signal (Sounding Reference Signal, SRS) resource pool configuration information, or the like.

Optionally, the preamble information may be further used for receiving time-frequency synchronization of a node. The time-frequency synchronization includes time synchronization and frequency synchronization. The time synchronization refers to adjusting clock values of different nodes to specific accuracy or specific tolerance, or adjusting an error between transmission start moments of time units of different nodes to a specific range. The frequency synchronization means that carrier frequency errors of different nodes each are maintained within a specific range. The carrier frequency errors of the different nodes each may refer to a relative/absolute error between an actual frequency and an expected frequency of a node, a relative/absolute error between actual frequencies of the different nodes, or the like.

Optionally, the preamble information may be further used for obtaining information about a communication channel. For example, the preamble information is used for channel estimation, channel quality evaluation, and the like. For example, the G node sends the preamble information. Correspondingly, the T node receives the preamble information. T may measure a channel between the G node and the T node based on the preamble information, to obtain channel quality and the like.

In a possible implementation, content of the preamble information may be predefined (for example, specified in a protocol), pre-configured, configured by using higher layer signaling, or the like.

### 5. Association

The "association" mentioned in this application indicates a process in which a node establishes a connection to another node. Optionally, a process in which a node is "associated" with another node may alternatively be described as a process in which a node "accesses" another node.

### 6. Channel occupancy time (channel occupancy time, COT)

The COT may be a time period in which a communication domain or a node in the communication domain continuously occupies a channel. Optionally, the COT may include a start moment and/or an end moment of the time period, or may not include a start moment and/or an end moment of the time period. This is not limited in this application.

That the communication domain or the node in the communication domain continuously occupies a channel may be understood as that the channel is used to transmit data of the communication domain or the node in the communication domain, or the node in the communication domain can perform data transmission on the channel.

### 7. Listening before talk (listening before talk, LBT)

The LBT refers to a mode in which the communication domain or the node of the communication domain discontinuously occupies a channel for data transmission. For example, the G node in the communication domain releases the channel at an end of the COT. After the G node releases the channel, data may be transmitted on the channel by a G node in another communication domain. Alternatively, after the G node releases the channel, the G node may occupy another channel in a channel contention manner again.

A trigger condition for the G node to perform channel contention is not limited in this application. For example, when the communication domain needs to perform data transmission, the G node is triggered to perform channel contention, or when a preset condition is met, the G node is triggered to perform channel contention.

Optionally, the node in this application may operate in an LBT mode. For example, the G node may operate in the LBT mode.

### 8. Sequence

The sequence mentioned in this application may be a pseudo-random sequence, for example, a Zadoff-Chu (Zadoff-Chu, ZC) sequence, a Gold (Gold) sequence, or a Hadamard (Hadamard) sequence.

Optionally, one or more pseudo-random sequences may be provided. In other words, the sequence mentioned in this application may include one or more pseudo-random sequences. For example, the sequence may be a ZC sequence, the sequence may consist of a ZC sequence and a Gold sequence, or the like.

### 9. Synchronization signal

The synchronization signal, for example, a training signal (first training signal, FTS) and/or a training signal (secondary training signal, STS), may be used for time synchronization. The FTS and the STS are signals used for time synchronization in the SLB access technology. The FTS is a coarse synchronization signal, and the STS is a fine synchronization signal. One FTS and one STS may be a group. In each group of signals, a signal that first appears in time domain is an FTS, and a signal that appears later in time domain is an STS. For example, the FTS may be a sequence whose root index is 1 or 40 and whose length is 39, for example, a ZC sequence. For example, the STS may be a sequence whose root index is from 1 to 20 and whose length is 39, for example, a ZC sequence. It should be understood that, these are merely specific examples of the synchronization signal herein. The synchronization signal may alternatively be another signal that can be used for time synchronization. This is not limited in this application.

The foregoing descriptions of the technical terms are optionally used in the following embodiments.

The following describes a system architecture in embodiments of this application. It should be noted that the system architecture described in this application is intended to describe the technical solutions in this application more clearly, and do not constitute a limitation on the technical solutions provided in this application. A person of ordinary skill in the art may learn that with evolution of the system architecture and emergence of new service scenarios, the technical solutions provided in this application are also applicable to similar technical problems.

Refer to FIG. 2. FIG. 2 is a diagram of a possible communication system according to an embodiment of this application. The communication system includes a first node 201, at least one node (for example, a node 2011, a node 2012, and a node 2013 in FIG. 2) associated with the first node 201, a second node 202, and at least one node (for example, a node 2021, a node 2022, and a node 2023 in FIG. 2) associated with the second node 202. Each node in FIG. 2 has a communication capability. For example, the first node 201 may send a signal and/or receive a signal.

Optionally, the first node 201 and the second node 202 may be perception-free to each other. In other words, the first node 201 cannot listen to a signal of the second node 202, and the second node 202 cannot listen to a signal of the first node 201 either. It may also be understood that the first node 201 is outside signal coverage of the second node 202, and the second node 202 is outside signal coverage of the first node 201.

In a possible implementation, the signal coverage of the first node 201 may overlap the signal coverage of the second node 202. It may also be described as follows: A communication domain in which the first node 201 is located overlaps a communication domain in which the second node 202 is located. For ease of description, the communication domain in which the first node 201 is located may be referred to as a first communication domain, and the communication domain in which the second node 202 is located may be referred to as a second communication domain. Optionally, the at least one node associated with the first node 201 may be located in at least one communication domain. For example, in FIG. 2, the node 2011 and the node 2012 are located in the first communication domain, and the node 2013 is located in the first communication domain and the second communication domain, that is, the node 2013 is located in an overlapping area between the first communication domain and the second communication domain. Similarly, the at least one node associated with the second node 202 may be located in at least one communication domain. For example, in FIG. 2, the node 2021 and the node 2022 are located in the second communication domain, and the node 2023 is located in the first communication domain and the second communication domain, that is, the node 2023 is located in the overlapping area between the first communication domain and the second communication domain. A specific communication domain in which each node is located is not limited in this application.

In addition, there may be a communication link between the first node 201 and the at least one node associated with the first node 201. Similarly, there may be a communication link between the second node 202 and the at least one node associated with the second node 202. In this application, the communication link may include various types of connection media, including a wired link (for example, an optical fiber), a wireless link, a combination of a wired link and a wireless link, or the like. For example, a short-distance connection technology may be used, and includes SparkLink, 802.11b/g, Bluetooth (Bluetooth, BT), Zigbee (Zigbee), a radio frequency identification (radio frequency identification, RFID) technology, an ultra-wideband (ultra-wideband, UWB) technology, and the like. For another example, a long-distance connection technology may alternatively be used, and includes but is not limited to a long term evolution (Long Term Evolution, long term evolution)-based communication technology, a fifth generation mobile communication technology (5th generation mobile networks or 5th generation wireless systems, 5th-Generation, 5G or 5G technology for short), a global system for mobile communications (global System for mobile communications, GSM), a general packet radio service (general packet radio service, GPRS), and a universal mobile telecommunications system (universal mobile telecommunications system, UMTS).

In some specific implementation scenarios, the first node 201 and the second node 202 may be referred to as G nodes, control nodes, or access points (access point, AP). The at least one node associated with the first node 201 and the at least one node associated with the second node 202 may be referred to as T nodes, terminal nodes, or stations (station).

It should be understood that a quantity, locations, and connection relationships of nodes shown in FIG. 2 are a possible case for ease of description, and are not intended to limit a specific communication system and a specific communication scenario.

The following describes embodiments of this application in detail. Specifically, the following uses an example in which the first node and the second node are respectively a first grant node and a second grant node for description. In this case, a node associated with the first node and a node associated with the second node may be referred to as terminal nodes or the like. It should be noted that names of messages between nodes, names of parameters in the messages, or the like in the following embodiments are merely examples, and there may be other names in a specific implementation. This is not specifically limited in embodiments of this application.

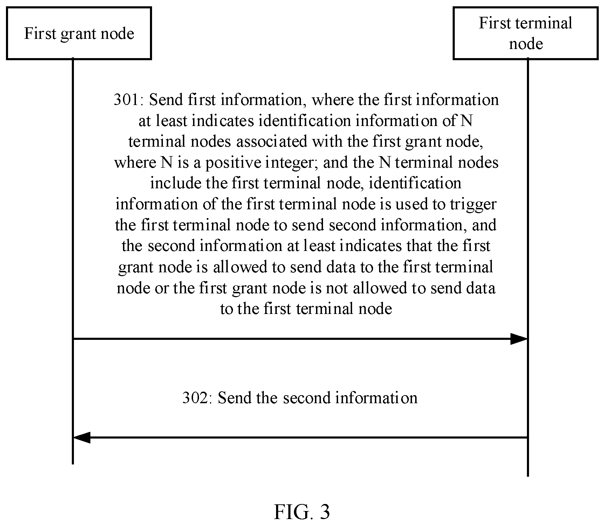

FIG. 3 shows a communication method according to an embodiment of this application. The communication method includes but is not limited to the following steps:

301: A first grant node sends first information. The first information at least indicates identification information of N terminal nodes associated with the first grant node, where N is a positive integer. The N terminal nodes include a first terminal node, identification information of the first terminal node is used to trigger the first terminal node to send second information, and the second information at least indicates that the first grant node is allowed to send data to the first terminal node or the first grant node is not allowed to send data to the first terminal node.

Correspondingly, the first terminal node receives the first information.

302: The first terminal node sends the second information.

Correspondingly, the first grant node receives the second information, and determines, based on the second information, whether to send data to the first terminal node. Optionally, when the second information indicates that the first grant node is allowed to send data to the first terminal node, the first grant node sends the data to the first terminal node. When the second information indicates that the first grant node is not allowed to send data to the first terminal node, the first grant node does not send the data to the first terminal node.

The following describes in details how to perform steps 301 and 302.

A name of information (for example, the first information and the second information) mentioned in this application is merely for ease of description, but should not be considered as a limitation on the information. For example, the first information may be referred to as preamble information or the like. The following describes the first information and the second information in detail.

The first information indicates the identification information of the N terminal nodes associated with the first grant node. For example, it may be understood that the first information includes a first field, and the first field indicates the identification information of the N terminal nodes.

It should be noted that a name of a field (for example, the first field) mentioned in this application is merely for ease of description, but should not be considered as a limitation on the field. For example, the first field may also be referred to as a roll call field. For ease of description, that the first field is a roll call field is used as an example for description below, and should not be considered as a limitation on this application.

Optionally, that the roll call field indicates the identification information of the N terminal nodes may be understood as follows: X bits in the roll call field carry the identification information of the N terminal nodes. X may be a positive integer, for example, a multiple of 12, a multiple of 48, or another value.

For example, it is assumed that N is 3. Identification information of three terminal nodes is all physical layer identification, and X may be 36. The physical layer identification may occupy 12 bits. In other words, when the identification information of the N terminal nodes is all physical layer identification, X may be a multiple of 12.

For another example, it is assumed that N is 3. Identification information of three terminal nodes is all L2ID, and X may be 144. The L2ID may occupy 48 bits. In other words, when the identification information of the N terminal nodes is all L2ID, X may be a multiple of 48.

For another example, it is assumed that N is 3. Identification information of one terminal node in identification information of three terminal nodes is L2ID, identification information of the other two terminal nodes is physical layer identification, and X may be 72. In other words, when identification information of a part of terminal nodes in the identification information of the N terminal nodes may be physical layer identification, and identification information of the other part of terminal nodes may be L2ID, X may be another value.

Optionally, the first information may further indicate a first cyclic redundancy check (cyclic redundancy check, CRC) code used for checking. For example, the roll call field in the first information may further indicate the first CRC code. For example, Y bits in the roll call field carry the first CRC code. Y may be a positive integer. For example, Y is 24 or another value.

It should be noted that when a field (for example, the roll call field) mentioned in this application is used for a plurality of pieces of content, it may be understood that different parts of the field may correspond to different content. For example, a part of bits of the field indicate a part of the plurality of pieces of content, and the other part of bits of the field indicate the other part of the plurality of pieces of content. In a possible implementation, different content in the plurality of pieces of content may correspond to different fields. For example, the identification information of the N terminal nodes corresponds to one field, and the first CRC code corresponds to another field. This is not limited in this application.

Optionally, the first information may further indicate at least one of the following: first COT of the first grant node, identification information of the first grant node, N (that is, a quantity of users associated with the first grant node), or the like. For example, the first information may further include a second field, and the second field may indicate at least one of the following: the first COT, the identification information of the first grant node, the quantity of users associated with the first grant node, or the like. Optionally, the second field may be referred to as a preamble fixed-length (which may also be referred to as SIGNAL_fixed-length) field. For ease of description, that the second field is a preamble fixed-length field is used as an example for description below, and should not be considered as a limitation on this application.

It may be understood that different parts of the preamble fixed-length field may correspond to different content. For example, a part of bits of the preamble fixed-length field indicate the first COT, another part of bits of the preamble fixed-length field indicate the identification information of the first grant node, and still another part of bits of the preamble fixed-length field indicate the quantity of users associated with the first grant node. In a possible implementation, different content in the plurality of pieces of content may correspond to different fields. For example, the first COT, the identification information of the first grant node, and the quantity of users associated with the first grant node respectively correspond to different fields. This is not limited in this application. The following describes, with reference to some examples, that different parts in the preamble fixed-length field correspond to different content.

For example, that the preamble fixed-length field indicates the identification information of the first grant node may be understood as follows: Z bits in the preamble fixed-length field carry the identification information of the first grant node. Z is a positive integer, for example, 12, 48, or another value. For example, if the identification information of the first grant node is physical layer identification, Z is 12. For example, if the identification information of the first grant node is L2ID, Z is 48.

For example, that the preamble fixed-length field indicates the quantity of users associated with the first grant node may be understood as follows: K bits in the preamble fixed-length field indicate the quantity of users associated with the first grant node, the K bits correspond to 2^{K} states, and the states indicate the quantity of users associated with the first grant node. K may be a positive integer. For example, K may be 6 or another value. When K is 6, six bits in the preamble fixed-length field may correspond to 2⁶ states, as shown in Table 1. '000000' indicates that the quantity of users associated with the first grant node is 0, '000001' indicates that the quantity of users associated with the first grant node is 1, and other values are similar. Details are not described herein again.

**Table 1**

| State | Quantity of users associated with the first grant node |
|---|---|
| 000000 | 0 |
| 000001 | 1 |
| 000010 | 2 |
| ... | ... |
| 111111 | 63 |

In a possible implementation, the preamble fixed-length field may further indicate a quantity of time units occupied by the roll call field, for example, a quantity of time units occupied by the roll call field in time domain. Optionally, L bits in the preamble fixed-length field may indicate the quantity of time units occupied by the roll call field. The L bits may correspond to 2^{L} states, and the state indicates the quantity of time units occupied by the roll call field. L may be a positive integer. For example, that the time unit is a symbol is used as an example. L may be 8 or another value. When L is 8, eight bits in the preamble fixed-length field may correspond to 2⁸ states, as shown in Table 2. '00000000' indicates that a quantity of symbols occupied by the roll call field is 0, '00000001' indicates that the quantity of symbols occupied by the roll call field is 1, and other values are similar. Details are not described herein again. Optionally, the symbol herein may be, for example, a long CP symbol.

**Table 2**

| State | Quantity of symbols occupied by the roll call field |
|---|---|
| 00000000 | 0 |
| 00000001 | 1 |
| 00000010 | 2 |
| ... | ... |
| 11111111 | 256 |

It should be noted that a quantity of time units occupied by a field (for example, the roll call field or the preamble fixed-length field) is not limited in this application. For example, the preamble fixed-length field occupies P1 time units in time domain, where P1 may be a positive integer, for example, 15 or another value. For example, the preamble fixed-length field occupies 15 long CP symbols in time domain, that is, 38.09 µs and 1170 Ts. Optionally, it can be learned from Table 1 and Table 2 that a new bit is added to the preamble fixed-length field. To ensure that demodulation performance remains unchanged, for example, a bit rate remains unchanged, a quantity of time units occupied by the preamble fixed-length field in time domain may be adjusted. For example, the quantity of time units occupied by the preamble fixed-length field in time domain is increased, so that a node that receives the first information, for example, the first terminal node, can accurately obtain, through parsing, information indicated by the preamble fixed-length field. In a possible implementation, the preamble fixed-length field may occupy P1+M time units in time domain, where M is a positive integer, for example, M is 1 or another value. For example, the preamble fixed-length field occupies 16 long CP symbols in time domain, that is, 40.62 µs and 1248 Ts.

Optionally, there is an association relationship between a location of the roll call field in time domain and a location of the preamble fixed-length field in time domain. For example, the roll call field may be located after the preamble fixed-length field in time domain. The preamble fixed-length field may alternatively be located before the roll call field in time domain. The two descriptions are interchangeable. That the roll call field may be located after the preamble fixed-length field in time domain is used as an example for description below, and should not be considered as a specific limitation on this application.

Optionally, there may further be an association relationship between the location of the roll call field in time domain and a location of a first synchronization signal in the first information in time domain. For example, the first synchronization signal may be located after the second field and before the first field in time domain. It should be understood that the location of the roll call field in time domain is merely provided herein as an example. The location of the roll call field is not limited in this application. For example, the location of the roll call field in time domain may be any location between the first synchronization signal and the preamble fixed-length field.

Optionally, the first information may further indicate first protocol version information. For example, the preamble fixed-length field in the first information indicates the first protocol version information. In this way, the node that receives the first information can learn of a protocol version that needs to be used, thereby ensuring consistency of understanding of the protocol version by both communication parties.

Protocol version information (for example, the first protocol version information) mentioned in this application may be used to uniquely identify a protocol version, for example, may be a protocol version number or a protocol version identifier. Herein, these are merely some examples. This is not limited in this application. Any information that can uniquely identify a protocol version may be used as the protocol version information in this application.

For example, that the second information indicates that the first grant node is allowed to send data to the first terminal node or the first grant node is not allowed to send data to the first terminal node may be understood as follows: the second information includes a third field, and the third field may indicate that the first grant node is allowed to send data to the first terminal node or the first grant node is not allowed to send data to the first terminal node. Optionally, the third field may be referred to as an acknowledgment (ACK) field, and the acknowledgment field is used as an example for description below. Optionally, the acknowledgment field may carry a sequence, for example, a ZC sequence.

It should be noted that at least one sequence, for example, the ZC sequence, may be predefined or preconfigured in a terminal node (for example, the first terminal node) in this application. In this way, the terminal node may carry a corresponding sequence in the acknowledgment field or may not perform any action based on a signal interference status, to indicate whether a grant node associated with the terminal node is allowed to send data.

For example, a ZC sequence, for example, a first ZC sequence, is predefined or preconfigured for the first terminal node. When the first terminal node perceives that there is no interference signal, the first terminal node may send the first ZC sequence to indicate that the first grant node is allowed to send data to the first terminal node. In this case, it may be considered that the acknowledgment field carries the first ZC sequence. When the first terminal node perceives that there is an interference signal, the first terminal node does not perform any action, to implicitly indicate that the first grant node is not allowed to send data to the first terminal node. In this case, it may be considered that the acknowledgment field does not carry a sequence.

For another example, a plurality of sequences are predefined or pre-configured for the first terminal node, and include the first ZC sequence and a second ZC sequence. When the first terminal node perceives that there is no interference signal, the first terminal node may send the first ZC sequence to indicate that the first grant node is allowed to send data to the first terminal node. In this case, it may be considered that the acknowledgment field carries the first ZC sequence. When the first terminal node perceives that there is an interference signal, the first terminal node may send the second ZC sequence to indicate that the first grant node is not allowed to send data to the first terminal node. In this case, it may be considered that the acknowledgment field carries the second ZC sequence. Alternatively, when the first terminal node perceives that there is an interference signal, the first terminal node does not perform any action, to implicitly indicate that the first grant node is not allowed to send data to the first terminal node. In this case, it may be considered that the acknowledgment field does not carry a sequence.

For example, a manner in which the first terminal node perceives whether there is an interference signal may be that the first terminal node cannot synchronize with a detected signal, and the signal may be considered as the interference signal. Otherwise, it may be considered that there is no interference signal. Alternatively, the first terminal node may synchronize with the detected signal, but identification information corresponding to the signal is not the identification information of the first terminal node. It may be considered that the signal is an interference signal. Otherwise, it may be considered that there is no interference signal.

Optionally, the first ZC sequence and the second ZC sequence may be different. For example, it may be understood as one of the following:
(1) A root index of the first ZC sequence is the same as a root index of the second ZC sequence, and a length of the first ZC sequence is different from a length of the second ZC sequence. For example, the first ZC sequence is a sequence whose root index is 20 and whose length is 39, and the second ZC sequence is a sequence whose root index is 20 and whose length is 40.
(2) The root index of the first ZC sequence is different from the root index of the second ZC sequence, and the length of the first ZC sequence is the same as the length of the second ZC sequence. For example, the first ZC sequence is a sequence whose root index is 20 and whose length is 39, and the second ZC sequence is a sequence whose root index is 21 and whose length is 39.
(3) The root index of the first ZC sequence is different from the root index of the second ZC sequence, and the length of the first ZC sequence is different from the length of the second ZC sequence. For example, the first ZC sequence is a sequence whose root index is 20 and whose length is 39, and the second ZC sequence is a sequence whose root index is 21 and whose length is 40.

The first ZC sequence and the second ZC sequence in the foregoing manner (1) to manner (3) are merely some examples, and there may be another implementation. This is not limited in this application.

Optionally, a quantity of acknowledgment fields may be the same as the quantity of users associated with the first grant node indicated by the preamble fixed-length field. In other words, a plurality of users may be in one-to-one correspondence with a plurality of acknowledgment fields. For example, the N terminal nodes may correspond to N acknowledgment fields. The user may independently determine whether the acknowledgment field carries a corresponding sequence, for example, determine whether the acknowledgment field carries the corresponding sequence based on whether there is signal interference. This is not limited in this application.

Optionally, when the ZC sequence carried in the default acknowledgment field indicates that the first grant node is allowed to send data to the user, the first grant node may learn, in an energy detection manner, whether a corresponding terminal node sends the ZC sequence. In other words, the plurality of users may be in one-to-one correspondence with the plurality of acknowledgment fields, and different users may send corresponding ZC sequences in different acknowledgment fields, so that the first grant node may separately perform energy detection. When energy is detected in the acknowledgment field corresponding to the user, it indicates that the first grant node may send data to the user. When no energy is detected in the acknowledgment field, it indicates that the first grant node cannot send data to the user. This reduces a delay caused by signaling parsing.

The acknowledgment field may occupy a corresponding time unit in time domain. For example, the acknowledgment field occupies P2 time units in time domain, where P2 may be a positive integer, for example, 1 or another value. For example, the acknowledgment field occupies one long CP symbol in time domain, that is, 2.54 µs and 78 Ts. Optionally, when there are a plurality of acknowledgment fields, quantities of time units occupied by different acknowledgment fields in time domain may be partially the same, completely the same, or completely different. This is not limited in this application.

Optionally, the second information may further indicate second COT. For example, the second information may include a fourth field, and the fourth field indicates the second COT. Optionally, the fourth field may be referred to as a channel occupation response (channel occupation response, COR) field. For ease of description, that the fourth field is a COR field is used as an example for description below, and should not be considered as a limitation on this application.

The second COT is associated with the first COT. For example, a start location of the second COT may be earlier than, equal to, or later than a start location occupied by the second information in time domain, and an end location of the second COT may be earlier than or equal to an end location of the first COT. Optionally, a length of the second COT is less than a length of the first COT. In other words, a difference between the first COT and the second COT is less than, equal to, or greater than a length of a time unit occupied by the first information in time domain.

Optionally, that the COR field indicates the second COT may be understood as follows: the COR field indicates a quantity of time units included in the second COT. For example, S bits in the COR field carries the quantity of time units included in the second COT. The S bits correspond to 2^{S} states, and the state indicate the quantity of time units included in the second COT. S may be a positive integer. For example, that the time unit is a radio frame is used as an example. S may be 10 or another value. When S is 10, 10 bits in the COR field may correspond to 2¹⁰ states, as shown in Table 3. '0000000000' indicates that a quantity of radio frames included in the second COT is 0, '0000000001' indicates that the quantity of radio frames included in the second COT is 1, and other values are similar. Details are not described herein again.

**Table 3**

| State | Quantity of radio frames included in the second COT |
|---|---|
| 0000000000 | 0 |
| 0000000001 | 1 |
| 0000000010 | 2 |
| ... | ... |
| 1111111111 | 1024 |

The COR field may occupy a corresponding time unit in time domain. For example, the COR field occupies P3 time units in time domain, where P3 may be a positive integer, for example, 9 or another value. For example, the COR field occupies nine long CP symbols in time domain, that is, 22.85 µs and 702 Ts.

Optionally, the second information may further indicate the identification information of the first grant node. For example, the COR field may further indicate the identification information of the first grant node. For example, T bits in the COR field carry the identification information of the first grant node, where T is a positive integer, for example, 12, 48, or another value.

For example, if the identification information of the first grant node is physical layer identification, T may be 12. Alternatively, if the identification information of the first grant node is L2ID, T may be 48.

Optionally, the second information may further indicate at least one of the following: second protocol version information, a second CRC code used for checking, or the like. For example, the COR field may further indicate at least one of the following: the second protocol version information, the second CRC code, or the like. For example, R bits in the COR field carry the second CRC code, where R is a positive integer, for example, 2 or another value. For example, W bits in the COR field carry the first CRC code, where W is a positive integer, for example, 24 or another value. Optionally, when S, T, R, and W are 10, 48, 2, and 24 respectively, a length of the COR field is 84 bits. When S, T, R, and W are 10, 12, 2, and 24 respectively, the length of the COR field is 48 bits.

In a possible implementation, the first protocol version information may be the same as or different from the second protocol version information. When the first protocol version information is different from the second protocol version information, because a higher protocol version may be compatible with a lower protocol version, it may be considered that a protocol version indicated by the first protocol version information is lower than or higher than a protocol version indicated by the second protocol version information. Optionally, there is an association relationship between a location of the acknowledgment field in time domain and a location of the COR field in time domain. For example, the acknowledgment field may be located after the COR field in time domain. In other words, the COR field may be located before the acknowledgment field in time domain. The two descriptions are interchangeable. It should be understood that the locations of the two fields in time domain are merely provided herein as an example. The locations of the two fields are not limited in this application. For example, the acknowledgment field may be located before the COR field in time domain.

In addition, when there are a plurality of acknowledgment fields, the plurality of acknowledgment fields may all be located after the COR field in time domain. Alternatively, the plurality of acknowledgment fields may all be located before the COR field in time domain. Alternatively, in the plurality of acknowledgment fields, a part of the acknowledgment fields may be located after the COR field, and the other part of the acknowledgment fields may be located before the COR field. This is not limited in this application.

Optionally, a location of an acknowledgment field corresponding to any one of the N terminal nodes in this application in time domain may be further associated with a location of identification information of the terminal node in the roll call field. For example, a location of an acknowledgment field corresponding to the first terminal node in time domain may be further associated with a location of the identification information of the first terminal node in the roll call field. For example, the roll call field indicates identification information of three terminal nodes, which is respectively identification information of a terminal node 1 to identification information of a terminal node 3. In the roll call field, a location of the identification information of the terminal node 1 is prior to a location of the identification information of the terminal node 3, and the location of the identification information of the terminal node 3 is prior to a location of the identification information of the terminal node 2. Therefore, an acknowledgment field corresponding to the terminal node 1 is located before an acknowledgment field corresponding to the terminal node 3 in time domain, and the acknowledgment field corresponding to the terminal node 3 is located before an acknowledgment field corresponding to the terminal node 2 in time domain. In other words, if the terminal node 1 to the terminal node 3 all need to send ZC sequences in the corresponding acknowledgment fields, a sequence of sending the corresponding ZC sequences is sequentially the terminal node 1, the terminal node 3, and the terminal node 2.

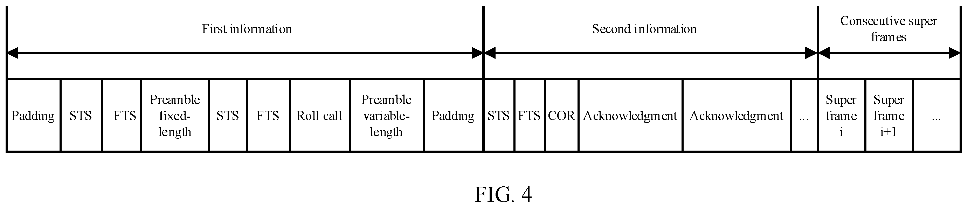

In addition, the first information may further indicate other content. Similarly, the second information may further indicate other content. The following provides descriptions by using an example with reference to a structure of an LBT frame shown in FIG. 4. In FIG. 4, the LBT frame may include a padding (padding) field, an STS, an FTS, a preamble fixed-length field, a roll call field, a preamble variable-length (which may also be referred to as SIGNAL_variable-length) field, a COR field, one or more acknowledgment fields, and one or more super frames. In other words, the LBT frame includes first information, second information, and consecutive super frames. The first information includes the padding field, the STS, the FTS, the preamble fixed-length field, the roll call field, and the preamble variable-length field. The second information includes the STS, the FTS, the COR field, and the one or more acknowledgment fields. The consecutive super frames may include the one or more super frames. It may be understood that this is merely an example description herein, and should not be considered as a limitation on this application. For the preamble fixed-length field, the roll call field, the COR field, and the acknowledgment field, refer to the foregoing related descriptions. The following describes other fields in the LBT frame in detail. Details are as follows:

### 1. Padding field

The padding field can use any data, usually consisting of a plurality of bits '0'. A length of the padding field may be adjusted based on a requirement to ensure that a length of an entire data packet is compliant with a requirement of a minimum frame length. For example, the padding field is used to ensure that a length of the first information is compliant with the requirement of the minimum frame length. Optionally, a padding field located after the preamble variable-length field may also be referred to as a preamble variable-length padding field, and is used to ensure radio frame alignment. For ease of differentiation, a padding field located on a start location in the first information may be referred to as a first padding field, and a padding field located on an end location in the first information may be referred to as a second padding field.

Optionally, a start location of the first padding field is located on the start location of the first information, namely, a start location of the LBT frame. In other words, a location of the first padding field in time domain is a start location of the first information in time domain, namely, the start location of the LBT frame. Similarly, an end location of the second padding field is located on the end location of the first information. In other words, a location of the second padding field time in domain is an end location of the first information in time domain.

Optionally, the padding field may also be referred to as a protection field. For example, the first padding field and the second padding field may also be respectively referred to as a first protection field and a second protection field. A name of the padding field is not limited in this application. For ease of description, the following uses the first padding field and the second padding field as an example for description.

The preamble variable-length field may be used to send a system message (for example, Glink-SystemInfo-Message), so that a broadcast message is sent to another node in the communication domain in the preamble information. Compared with sending the system message in the super frame, sending the system message in the first information can reduce a transmission delay.

### 2. STS and FTS

At least one of the STS and the FTS may appear in at least one location in the LBT frame in a form of a group of signals. A specific location of the group of signals in the LBT frame is not limited in this application. For example, there may be three groups of signals in FIG. 4. A group of signals may be located after the first padding field and before the preamble fixed-length field. Another group of signals may be located after the preamble fixed-length field and before the roll call field. Still another group of signals may be located after the second padding field and before the COR field. For ease of description, the three groups of signals may be sequentially referred to as a first group of synchronization signals, a second group of synchronization signals, and a third group of synchronization signals. The three groups of synchronization signals are all used for time synchronization, and may be further used to respectively ensure demodulation performance of the preamble fixed-length field, the roll call field, and the COR field.

The STS occupies P4 time units in time domain, where P4 may be a positive integer, for example, 5. For example, the STS occupies five short symbols in time domain, that is, 10.4 µs and 320 Ts. The FTS occupies P5 time units in time domain, where P5 may be a positive integer, for example, 5. For example, the FTS occupies five short symbols in time domain, that is, 10.4 µs and 320 Ts.

Optionally, quantities of time units occupied by STSs at different locations in the LBT frame in time domain may be partially the same, completely the same, or completely different. Quantities of time units occupied by FTSs at different locations in the LBT frame in time domain may be partially the same, completely the same, or completely different. This is not limited in this application.

### 3. One or more super frames in the LBT frame

A plurality of super frames may be consecutive in time domain, that is, may be referred to as consecutive super frames. For example, a super frame i and a super frame i+1 are adjacent super frames in time domain. A quantity of super frames in the LBT frame is not limited in this application.

It should be noted that the frame structure of the LBT frame shown in FIG. 4 is merely an example. For example, a sequence relationship between fields in the LBT frame in time domain is an example, and there may be another implementation. For example, sorting of the fields in the first information in time domain may alternatively be sequentially the first padding field, the STS, the FTS, the preamble fixed-length field, the roll call field, the STS, the FTS, the preamble variable-length field, and the second padding field. The frame structure of the LBT frame, the sequence relationship between fields in the LBT frame in time domain, and the like are not limited in this application.

In addition, with reference to FIG. 4, the first COT in this application may include at least time occupied by the first information, time occupied by the second information, and at least one super frame. The second COT may include at least the time occupied by the second information and the at least one super frame.

Optionally, there may further be a guard time interval, for example, a first guard time interval, between the second padding field in the LBT frame and the STS located after the second padding field. In this case, the first COT may further include the first guard time interval. The first guard time interval is a transmit/receive transition guard time interval. A start location of the first guard interval is the end location of the second padding field, and an end location of the first guard interval is a start location of the STS. In other words, the start location of the first guard interval is the end location of the first information, and the end location of the first guard interval is a start location of the second information. The two descriptions are interchangeable.

A name of a guard time interval (for example, the first guard time interval) mentioned in this application is merely for ease of description, and should not be considered as a limitation on this application.

Optionally, the second COT may further include the first guard time interval, or may not include the first guard time interval. When the second COT includes the first guard time interval, it may be considered that the start location of the second COT is the end location of the second padding field. In other words, the start location of the second COT is the end location of the first information. The two descriptions are interchangeable. When the second COT does not include the first guard time interval, it may be considered that the start location of the second COT is an end location of the first guard time interval. In other words, the start location of the second COT is the start location of the second information. The two descriptions are interchangeable.

Optionally, there may further be a guard time interval, for example, a second guard time interval, between a latest acknowledgment field in the LBT frame in time domain and the super frame i. In this case, the first COT may further include the second guard time interval. The second guard time interval is a transmit/receive transition guard time interval. A start location of the second guard time interval is an end location of the acknowledgment field, and an end location of the second guard time interval is a start location of the super frame i. In other words, the start location of the second guard time interval is an end location of the second information, and the end location of the second guard time interval is a start location of the consecutive super frames. The two descriptions are interchangeable.

In a possible implementation, a field in this application may further occupy a corresponding frequency domain resource. For example, the field may occupy at least one subcarrier in frequency domain.

For example, the roll call field may occupy completely 38 subcarriers in frequency domain, and subcarriers whose indexes are 10 and 30 may be used as phase adjusted signal (phase adjustment signal, PAS) symbols. The PAS may be used to adjust a phase difference.

For another example, the COR field may occupy completely 38 subcarriers in frequency domain, and subcarriers whose indexes are 10 and 30 may be used as PAS symbols.

For another example, the acknowledgment field may be full-bandwidth or frequency-domain comb filtered in frequency domain, and subcarriers whose indexes are 10 and 30 may be used as PAS symbols. The full-bandwidth herein means occupying completely 38 subcarriers, and comb filtering means occupying subcarriers at intervals in frequency domain. For example, in addition to the subcarriers whose indexes are 10 and 30, a corresponding subcarrier may be extracted as the acknowledgment field in a manner in which a comb filtering quantity is 4 starting from a subcarrier whose index is 0. That is, the acknowledgment field occupies subcarriers whose indexes are 0, 5, 15, 20, 25, 35, and 40.

It should be noted that, in this application, quantities of subcarriers occupied by different fields in frequency domain may be partially the same, completely the same, or completely different. This is not limited in this application.

Optionally, a location of a field in this application in frequency domain may be predefined or preconfigured. This is not limited in this application.

In a possible implementation, a field in this application may be modulated by using a corresponding modulation scheme. For example, the modulation scheme may be quadrature phase shift keying (quadrature phase shift keying, QPSK), or may be binary phase shift keying (binary phase shift keying, BPSK), 16-quadrature amplitude modulation (quadrature amplitude modulation, QAM), 64-QAM, 256-QAM, 1024-QAM, 4096-QAM, or the like. This is not limited in this application. For example, both the roll call field and the COR field may be modulated by using the QPSK. It should be noted that modulation schemes used for different fields in this application may be partially the same, completely the same, or completely different. This is not limited in this application. In a possible implementation, some or all fields in this application may not be modulated. For example, the acknowledgment field is not modulated. This is not limited in this application.

With reference to the foregoing descriptions of the first information and the second information, the following describes in detail an operation performed by a corresponding node to send and/or receive corresponding information.

Optionally, step 301 may be understood as follows: the first grant node sends the first information after channel contention, for example, sends the first information when detecting that a channel is idle. When detecting that energy on the channel is lower than a threshold, the first grant node may consider that the channel is idle. Optionally, the threshold may be predefined, preconfigured, or the like. Further, before the first grant node sends the first information, a counter of the first grant node may be at 0 or a maximum value. For example, when the first grant node detects that the channel is idle, and the counter of the first grant node is at 0 or a maximum value, the first grant node may send the first information. The counter in this application may use a forward timing manner or a countdown manner. This is not limited herein. When the counter uses the forward timing manner, the counter of the first grant node starts timing from 0, and stops timing when the counter of the first grant node is at the maximum value. When the counter uses the countdown manner, the counter of the first grant node starts counting down from the maximum value, and stops timing when the counter of the first grant node is at 0. Optionally, the counter mentioned in this application may be referred to as a random back off counter. A name of the counter is not limited in this application.

It should be noted that, after the first grant node sends the first information, all nodes in signal coverage of the first grant node may receive the first information. The following describes the nodes in the signal coverage of the first grant node in several cases. Details are as follows:
1. After receiving the first information, any one of the N terminal nodes may send corresponding second information. For example, the first terminal node may send the second information. For ease of understanding, the following uses the first terminal node as an example to describe details after the first terminal node receives the first information, which should not be considered as a limitation on this application.

For example, the first terminal node may perform time synchronization based on the FTS and the STS in the first information.

For example, the first terminal node may determine, based on the preamble fixed-length field in the first information, the quantity of time units occupied by the roll call field.

For example, the first terminal node may determine the second COT based on the preamble fixed-length field in the first information.

For example, the first terminal node may determine, based on the preamble fixed-length field in the first information, the quantity of users associated with the first grant node.

For example, the first terminal node may determine the second protocol version information based on the preamble fixed-length field in the first information.

For example, the first terminal node may trigger, based on the roll call field in the first information, the first terminal node to send the second information.

Herein, these are merely some possible examples. After receiving the first information, the first terminal node may further perform other actions, which are not listed one by one herein.

It may be understood that, after the first terminal node sends the second information, all nodes in signal coverage of the first terminal node may receive the second information.

For example, a grant node associated with the first terminal node, for example, the first grant node, may be included in the signal coverage of the first terminal node. After the first grant node receives the second information, because the second information may indicate that the first grant node is allowed to send data to the first terminal node or the first grant node is not allowed to send data to the first terminal node, the first grant node may learn whether to send data to the first terminal node.

For another example, a grant node not associated with the first terminal node, for example, the second grant node that is perception-free to the first grant node mutually, may further be included in the signal coverage of the first terminal node. Because the second information may indicate that the first grant node is not allowed to send data to the first terminal node, the second grant node may learn that the channel is occupied. In addition, the second information may further indicate the second COT. Therefore, the second grant node may also learn that the channel is occupied. Further, the second information may further indicate the identification information of the first grant node, and the second grant node may further learn that the channel is occupied by the first grant node. It should be understood that, when the second grant node learns that the channel is occupied, the second grant node may suspend a back off (back off) process. In other words, the counter is suspended, so that the counter does not perform timing, and the maximum value of the counter remains unchanged. After waiting for the channel to become idle again, the second grant node may start the counter again to perform timing. In this way, the second grant node may not send a signal at least in the second COT, thereby ensuring that the first terminal node does not receive signals of the first grant node and the second grant node at the same time in the second COT, reducing signal collision, improving communication quality of the node, and further improving user experience.

In a possible implementation, the second grant node may alternatively not be included in the signal coverage of the first terminal node, that is, it is considered that the second grant node cannot learn that the channel is occupied. Therefore, the second grant node may perform channel contention, and perform communication after the channel contention succeeds. In addition, if the second information fed back by the first terminal node indicates that the first grant node is allowed to send data to the first terminal node, it means that communication between the first grant node and the first terminal node is not interfered. In other words, both the two perception-free grant nodes send data. This improves channel utilization.

2. Optionally, one or more terminal nodes other than the N terminal nodes may further be included in the signal coverage of the first grant node. Herein, the one or more other terminal nodes may be classified into two types: one is a terminal node associated with the first grant node, and the other is a terminal node associated with the second grant node.

For the terminal node associated with the first grant node, because the first information does not include the identification information of the terminal node, after receiving the first information, the terminal node does not perform any action.

For the terminal node associated with the second grant node, because the first information may further indicate the first COT of the first grant node, after receiving the first information, the terminal node may set the first COT to the maximum value of the counter, and simultaneously suspend the back off process. In other words, the counter is suspended, so that the counter does not perform timing, and the maximum value of the counter remains unchanged. In this way, the terminal node may not perform data transmission within the first COT, thereby not interfering with data transmission of the first grant node.

For example, the terminal node associated with the first grant node may further be associated with the second grant node, or not associated with the second grant node. For example, the terminal node associated with the second grant node may further be associated with the first grant node, or not associated with the first grant node.

3. Optionally, another grant node may further be included in the signal coverage of the first grant node. After receiving the first information, the another grant node learns, by using the first COT indicated by the first information, that the channel is occupied. In this way, the another grant node may set the first COT to the maximum value of the counter, and simultaneously suspend the back off process.

Optionally, the another grant node may further learn, by using the identification information of the first grant node indicated by the first information, that the channel is occupied by the first grant node.

It can be learned that in the foregoing embodiment, the first information sent by the first grant node may indicate identification information of at least one terminal node associated with the first grant node, to trigger a corresponding terminal node to send the second information, so that the first grant node that receives the second information learns whether data can be sent. For example, if the first grant node sends data to the first terminal node based on the second information, it indicates that there is no signal collision problem during data transmission between the first grant node and the first terminal node. For example, if the first grant node does not send data to the first terminal node based on the second information, it indicates that there is a signal collision problem during data transmission between the first grant node and the first terminal node. Therefore, this can reduce a communication conflict between the first grant node and another grant node in a network, to implement interference avoidance, improve communication quality of the node, and enhance user experience.

The foregoing describes in detail the method in embodiments of this application. The following provides an apparatus in embodiments of this application.

An embodiment of this application further provides a communication apparatus configured to implement any one of the foregoing methods, for example, provides a communication apparatus that includes a unit (or means) configured to implement steps, in any one of the foregoing methods, performed by the first grant node, the first terminal node, or the like.

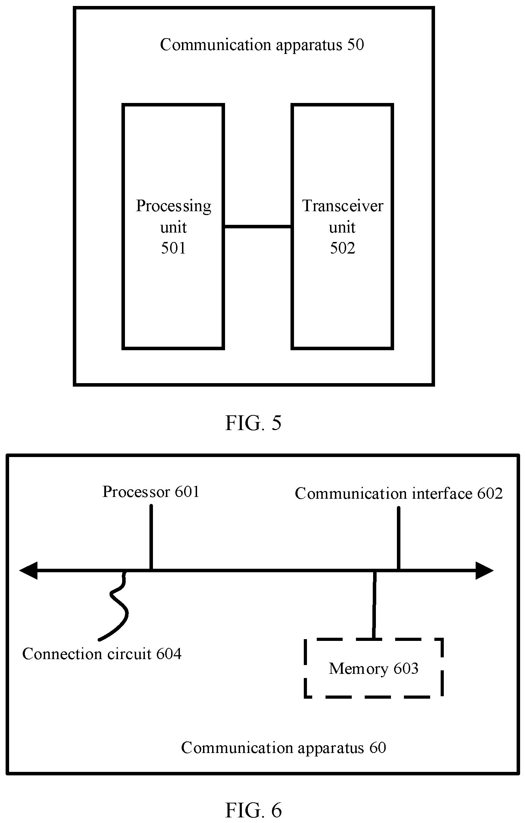

For example, refer to FIG. 5. FIG. 5 is a diagram of a structure of a communication apparatus 50 according to an embodiment of this application. The communication apparatus 50 includes a processing unit 501 and a transceiver unit 502, for example, to implement the method in the embodiment shown in FIG. 3.

It should be understood that division into the units in the foregoing communication apparatus is merely logical function division. During actual implementation, all or some of the units may be integrated into one physical entity, or may be physically separated. In addition, the units in the communication apparatus may be implemented in a form of software invoked by a processor. For example, the communication apparatus includes a processor, the processor is connected to a memory, the memory stores instructions, and the processor invokes the instructions stored in the memory, to implement any one of the foregoing methods or implement functions of the units in the communication apparatus. The processor is, for example, a general-purpose processor, such as a central processing unit (central processing unit, CPU) or a microprocessor, and the memory is a memory inside the communication apparatus or a memory outside the communication apparatus. Alternatively, a unit in the communication apparatus may be implemented in a form of a hardware circuit, and the hardware circuit may be designed to implement functions of a part or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement functions of a part or all of the units. For another example, in another implementation, the hardware circuit may be implemented by using a programmable logic device (programmable logic device, PLD). A field programmable gate array (field programmable gate array, FPGA) is used as an example. The hardware circuit may include a large quantity of logic gate circuits, and a connection relationship between the logic gate circuits is configured based on a configuration file, to implement the functions of some or all of the units. All the units of the communication apparatus may be implemented in the form of the software invoked by the processor, or may be implemented in the form of the hardware circuit, or a part of the units may be implemented in the form of the software invoked by the processor, and a remaining unit may be implemented in the form of the hardware circuit.

In this embodiment of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a specific function based on a logical relationship of a hardware circuit. The logical relationship of the hardware circuit is fixed or reconstructed. For example, the processor is a hardware circuit, such as an FPGA, implemented by using an application-specific integrated circuit (application-specific integrated circuit, ASIC) or a programmable logic device (programmable logic device, PLD). In the reconfigurable hardware circuit, a process in which the processor loads a configuration document to implement configuration of the hardware circuit may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit in the communication apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or a part of the units in the communication apparatus may be integrated, or may be independently implemented. In an implementation, these units are integrated together and implemented in a form of system-on-a-chip (system-on-a-chip, SOC). The SOC may include at least one processor, configured to implement any one of the foregoing methods or implement functions of the units of the communication apparatus. Types of the at least one processor may be different. For example, the at least one processor includes a CPU and an FPGA, a CPU and an artificial intelligence processor, or a CPU and a GPU.

Regardless of whether these functional modules are subdivided or combined, general procedures performed by the communication apparatus 50 in a positioning implementing process are the same. For example, the transceiver unit 502 in the communication apparatus 50 may be split into a receiving unit and a sending unit. Certainly, the transceiver unit may also be referred to as a communication unit. Usually, each unit corresponds to respective program code (or program instructions). When the program code corresponding to the unit is run on a processor, the unit executes a corresponding process to implement a corresponding function. It should be noted that for implementations of the following units, correspondingly refer to corresponding descriptions in the embodiment shown in FIG. 3.

In a possible implementation, the communication apparatus 50 may be the first grant node in the embodiment shown in FIG. 3, or a module in the first grant node, for example, a chip or an integrated circuit. The communication apparatus includes the processing unit 501 and the transceiver unit 502. The units are described as follows:

The transceiver unit 502 is configured to send first information. The first information at least indicates identification information of N terminal nodes associated with the first grant node, where N is a positive integer. The N terminal nodes include a first terminal node, identification information of the first terminal node is used to trigger the first terminal node to send second information, and the second information at least indicates that the first grant node is allowed to send data to the first terminal node or the first grant node is not allowed to send data to the first terminal node. The second information is received, and whether to send data to the first terminal node is determined based on the second information.

In a possible implementation, the communication apparatus 50 may be the terminal node in the embodiment shown in FIG. 3, for example, the first terminal node, or a module in the terminal node, for example, a chip or an integrated circuit. The communication apparatus includes the processing unit 501 and the transceiver unit 502. The units are described as follows:

The transceiver unit 502 is configured to receive the first information. The first information at least indicates the identification information of the N terminal nodes associated with the first grant node, where N is a positive integer. The N terminal nodes include a first terminal node, identification information of the first terminal node is used to trigger the first terminal node to send second information, and the second information at least indicates that the first grant node is allowed to send data to the first terminal node or the first grant node is not allowed to send data to the first terminal node. The second information is sent, and the second information is further used by the first grant node to determine whether to send data to the first terminal node.

Refer to FIG. 6. FIG. 6 is a diagram of a structure of another possible communication apparatus 60 according to an embodiment of this application. The communication apparatus 60 may include at least one processor 601 and a communication interface 602. Optionally, the communication apparatus 60 may further include at least one memory 603. Further, optionally, the communication apparatus 60 may further include a connection circuit 604. The processor 601, the communication interface 602, and/or the memory 603 are connected through the connection circuit 604, and communicate with each other through the connection circuit 604, to transfer a control signal and/or a data signal. Optionally, the communication apparatus 60 may be an independent device, for example, an independent device such as an ECU or a telematics box (T-box), or may be a component included in an independent device, for example, a chip, a software module, or an integrated circuit.

(1) The processor 601 is a module for performing an arithmetic operation and/or a logical operation, and may specifically include one or more of the following apparatuses: a CPU, an MCU, a GPU, an MPU, an ASIC, an FPGA, a CPLD, a coprocessor (assisting the central processing unit in completing corresponding processing and application), an NPU, and/or the like.

(2) The communication interface 602 may be configured to provide information input or output for the at least one processor. In some possible scenarios, the communication interface 602 may include an interface circuit, and/or, the communication interface 602 may be configured to receive data sent from the outside and/or send data to the outside. For example, the communication interface 602 may be a wired link interface including an Ethernet cable and the like, or may be a wireless link (Wi-Fi, Bluetooth, universal wireless transmission, an on-board short-range communication technology, another short-range wireless communication technology, or the like) interface. Optionally, the communication interface 602 may further include a transmitter (for example, a radio frequency transmitter or an antenna), a receiver, or the like coupled to the interface.

Optionally, when the communication apparatus 60 is an independent device, the communication interface 602 may include a receiver and a transmitter. The receiver and the transmitter may be a same component or different components. When the receiver and the transmitter are a same component, the component may be referred to as a transceiver.

Optionally, when the communication apparatus 60 is a chip or a circuit, the communication interface 602 may include an input interface and an output interface. The input interface and the output interface may be a same interface or different interfaces.

Optionally, a function of the communication interface 602 may be implemented through a transceiver circuit or a dedicated transceiver chip. The processor 601 may be implemented by using a dedicated processing chip, a processing circuit, a processor, or a general-purpose chip.

(3) The memory 603 is configured to provide storage space, and the storage space may store data such as an operating system and a computer program. The memory 603 may be one of or a combination of a plurality of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

Functions and actions of modules or units in the communication apparatus 60 listed above are merely examples for description.

Functional units in the communication apparatus 60 may be configured to implement the foregoing method. Herein, detailed descriptions are omitted to avoid repetition.

Optionally, the processor 601 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a dedicated processor and a general-purpose processor.

Optionally, when the compute device includes the at least one memory 603, if the processor 601 invokes a computer program to implement the foregoing data transmission method, the computer program may be stored in the memory 603.

An embodiment of this application further provides a computer-readable storage medium. The computer-readable storage medium stores computer instructions. When the computer instructions are executed, a computer is enabled to perform the method according to any one of embodiments in FIG. 3.

An embodiment of this application further provides a computer program product. The computer program product includes computer program code. When the computer program code is run on a computer, the computer is enabled to perform the method according to any one of embodiments in FIG. 3.

An embodiment of this application further provides a chip. The chip includes at least one processor and an interface. The processor is configured to: read and execute instructions stored in a memory. When the instructions are run, the chip is enabled to perform the method according to any one of embodiments in FIG. 3.

An embodiment of this application further provides a terminal. The terminal includes the foregoing communication apparatus, for example, includes one or more of the following: the communication apparatus 50 or the communication apparatus 60.

In a possible implementation, the terminal may be an intelligent terminal or a transportation means such as a vehicle, an uncrewed aerial vehicle, or a robot.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. A communication method, comprising:
sending, by a first grant node, first information, wherein the first information at least indicates identification information of N terminal nodes associated with the first grant node, wherein N is a positive integer; and the N terminal nodes comprise a first terminal node, identification information of the first terminal node is used to trigger the first terminal node to send second information, and the second information at least indicates that the first grant node is allowed to send data to the first terminal node or the first grant node is not allowed to send data to the first terminal node; and
receiving, by the first grant node, the second information, and determining, based on the second information, whether to send data to the first terminal node.

2. The method according to claim 1, wherein the first information further indicates first channel occupancy time of the first grant node, the second information further indicates second channel occupancy time, and the second channel occupancy time is associated with the first channel occupancy time.

3. The method according to claim 1 or 2, wherein the first information further indicates identification information of the first grant node, and the second information further indicates the identification information of the first grant node.

4. The method according to any one of claims 1 to 3, wherein the first information further indicates N.

5. The method according to any one of claims 1 to 4, wherein the first information comprises a first field and a second field, the first field indicates the identification information of the N terminal nodes, the second field indicates the first channel occupation time of the first grant node, and the first field is located after the second field in time domain.

6. The method according to claim 5, wherein the first information further comprises a first synchronization signal, and the first synchronization signal is located after the second field and before the first field in time domain.

7. The method according to claim 5 or 6, wherein the second field further indicates a quantity of time units occupied by the first field.

8. The method according to any one of claims 1 to 7, wherein the identification information of the N terminal nodes comprises physical layer identification of the N terminal nodes.

9. The method according to any one of claims 2 to 8, wherein the second information comprises a third field and a fourth field, the third field indicates that the first grant node is allowed to send data to the first terminal node or the first grant node is not allowed to send data to the first terminal node, the fourth field indicates the second channel occupancy time, and the third field is located after the fourth field in time domain.

10. The method according to claim 9, wherein that the fourth field indicates the second channel occupancy time comprises:
the fourth field indicates a quantity of time units comprised in the second channel occupancy time.

11. The method according to any one of claims 5 to 10, wherein a location of the third field in time domain is associated with a location of the identification information of the first terminal node in the first field.

12. A communication method, comprising:
receiving, by a first terminal node, first information, wherein the first information at least indicates identification information of N terminal nodes associated with a first grant node, wherein N is a positive integer; and the N terminal nodes comprise the first terminal node, identification information of the first terminal node is used to trigger the first terminal node to send second information, and the second information at least indicates that the first grant node is allowed to send data to the first terminal node or the first grant node is not allowed to send data to the first terminal node; and
sending, by the first terminal node, the second information, wherein the second information is further used by the first grant node to determine whether to send data to the first terminal node.

13. The method according to claim 12, wherein the first information further indicates first channel occupancy time of the first grant node, the second information further indicates second channel occupancy time, and the second channel occupancy time is associated with the first channel occupancy time.

14. The method according to claim 12 or 13, wherein the first information further indicates identification information of the first grant node, and the second information further indicates the identification information of the first grant node.

15. The method according to any one of claims 12 to 14, wherein the first information further indicates N.

16. The method according to any one of claims 12 to 15, wherein the first information comprises a first field and a second field, the first field indicates the identification information of the N terminal nodes, the second field indicates the first channel occupation time of the first grant node, and the first field is located after the second field in time domain.

17. The method according to claim 16, wherein the first information further comprises a first synchronization signal, and the first synchronization signal is located after the second field and before the first field in time domain.

18. The method according to claim 16 or 17, wherein the second field further indicates a quantity of time units occupied by the first field.

19. The method according to any one of claims 12 to 18, wherein the identification information of the N terminal nodes comprises physical layer identification of the N terminal nodes.

20. The method according to any one of claims 13 to 19, wherein the second information comprises a fourth field and a third field, the fourth field indicates the second channel occupancy time, the third field indicates that the first grant node is allowed to send data to the first terminal node or the first grant node is not allowed to send data to the first terminal node, and the third field is located after the fourth field in time domain.

21. The method according to claim 20, wherein that the fourth field indicates the second channel occupancy time comprises:
the fourth field indicates a quantity of time units comprised in the second channel occupancy time.

22. The method according to any one of claims 16 to 21, wherein a location of the third field in time domain is associated with a location of the identification information of the first terminal node in the first field.

23. A communication apparatus, comprising a unit or a module configured to implement the method according to any one of claims 1 to 22.

24. A communication apparatus, wherein the communication apparatus comprises at least one processor, and the at least one processor is configured to perform the method according to any one of claims 1 to 22.

25. A computer-readable storage medium, wherein the computer-readable storage medium stores computer instructions, and when the computer instructions are executed, the computer is enabled to perform the method according to any one of claims 1 to 22.

26. A computer program product, wherein the computer program product comprises computer program code, and when the computer program code is run on a computer, the computer is enabled to perform the method according to any one of claims 1 to 22.

27. A chip, wherein the chip comprises at least one processor and an interface, the processor is configured to: read and execute instructions stored in a memory, and when the instructions are run, the chip is enabled to perform the method according to any one of claims 1 to 22.
